# EUROPÄISCHE PATENTSCHRIFT

(11) **EP 1 316 402 B1**
(45) Veröffentlichungstag und Bekanntmachung des Hinweises auf die Patenterteilung: **29.03.2006**
(21) Anmeldenummer: 02024363.0
(22) Anmeldetag: 02.11.2002
(51) Int. Cl.: B29C 43/24, B29C 59/04, B29D 31/00, B32B 33/00, B29K 23/00

(54) **Verfahren zur Erzeugung von nano- und mikrostrukturierten Polymerfolien**
Process for manufacturing of nanotextured or microtextured polymer films
Procédé de fabrication de feuilles polymères nanostructurées ou microstructurées

(30) Priorität: 28.11.2001 DE 10158347
(43) Veröffentlichungstag der Anmeldung: 04.06.2003
(73) Patentinhaber: tesa AG, 20253 Hamburg (DE)
(72) Erfinder: Burmeister, Axel, 21244 Buchholz (DE)

(56) Entgegenhaltungen:
- EP-A- 0 369 781
- EP-A- 0 575 177
- EP-A- 0 799 686
- EP-A- 1 146 170
- WO-A-01/19600
- WO-A-95/00875
- WO-A-97/13633
- DE-A- 2 425 957
- DE-A- 19 941 048
- US-A- 4 211 743
- US-A- 4 477 502
- US-A- 5 281 371
- US-A- 5 759 455
- PATENT ABSTRACTS OF JAPAN vol. 014, no. 351 (M-1003), 30. Juli 1990 (1990-07-30) & JP 02 122916 A (CANON INC), 10. Mai 1990 (1990-05-10)

## Beschreibung

Die Erfindung betrifft ein Verfahren zur Erzeugung von nano- und mikrostrukturierten Polymerfolien.

Oberflächen, die Strukturen mit Größen im Bereich von 10 Nanometem bis zu 100 Mikrometern aufweisen, können Problemlösungen in verschiedensten Bereichen darstellen.

Bei optischen Bauteilen kann durch Mikrostrukturen Licht aufgespalten und in gewünschte Richtungen gelenkt werden. Mit Prismen strukturierte Folien können als Retroreflektoren Fahrbahnmarkierungen oder auf Verkehrszeichen eingesetzt werden.

Nichtoptische Anwendungen von mikrostrukturierten Oberflächen sind selbstreinigende Oberflächen (Lotoseffekt), die künstliche Haifischhaut (Verringerung des Strömungswiderstandes) und Schleifpapiere.

Der LotoseHekt und seine technische Nutzbarkeit sind besonders in der WO 96/04123 A1 offenbart. Demnach können Oberflächen von Gegenständen künstlich selbstreinigend gemacht werden, indem man sie künstlich mit einer Oberflächenstruktur aus Erhebungen und Vertiefungen versieht, wobei darauf zu achten ist, daß der Abstand zwischen den Erhebungen der Oberflächenstruktur im Bereich von 5 bis 200 µm, vorzugsweise 10 bis 100 µm, und die Höhe der Erhebungen im Bereich von 5 bis 100 µm, vorzugsweise 10 bis 50 µm, liegen, und wobei darauf zu achten ist, daß diese Erhebungen aus hydrophoben Polymeren oder haltbar hydrophobierten Materialien bestehen und daß die Erhebungen nicht durch Wasser oder durch Wasser mit Detergenzien ablösbar sind.

Derartige selbstreinigende Oberflächen lassen sich herstellen entweder dadurch, daß die Oberflächenstrukturen bereits bei der Herstellung aus hydrophoben Polymeren oder erst nachträglich geschaffen werden, und zwar entweder durch nachträgliches Prägen oder Ätzen oder durch Aufkleben eines Pulvers aus den hydrophoben Polymeren. Schließlich ist es möglich, derartige selbstreinigende Oberflächen von Gegenständen zu schaffen durch nachträgliches haltbares Hydrophobieren von zuvor hergestellten Oberflächen mit den gewünschten Strukturen.

Eine Möglichkeit zum nachträglichen haltbaren Hydrophobieren ist die nachträgliche Sitanisierung von zuvor hergestellten Oberflächen mit den gewünschten Strukturen. Eine Silanisierung kann auf allen Materialien erfolgen, die von Natur aus hydrophil sind, aber in der Lage sind, mit den reaktiven Gruppen der Silane zu reagieren, so daß letztendlich die Oberfläche aus den hydrophoben Resten der Silane besteht.

Technisch besonders bedeutungsvoll sind selbstreinigende Oberflächen von Gegenständen, die lichtdurchlässig sind und die aus optischen, ästhetischen oder technischen Gründen diese Lichtdurchlässigkeit für lange Zeit behalten sollen. Insbesondere handelt es sich dabei um lichtdurchlässige Verglasungen von Gebäuden, Fahrzeugen, Sonnenkollektoren etc.. Von wirtschaftlicher und technischer Bedeutung ist aber auch die Herstellung von selbstreinigenden Oberflächen bei Hausfassaden, Dächern, Denkmälern und Zelten sowie bei Innenbeschichtungen von Silos, Tanks oder Rohrleitungen, die entweder wäßrige Lösungen enthalten oder leicht durch bewegtes Wasser rückstandsfrei gereinigt werden können. Von. Interesse sind auch die Außenbeschichtungen von Fahrzeugen wie Autos, Zügen oder Flugzeugen. Hierbei ist jedoch zu beachten, daß diese Oberflächen dann bei der Reinigung mit bewegtem Wasser keinen starken mechanischen Beanspruchungen ausgesetzt werden dürfen, da dies zu einem Einebnen oder Polieren der Oberflächenstrukturen führt, so daß diese glänzend werden, aber ihre Fähigkeit zur Selbstreinigung verlieren.

Sofern es nicht möglich oder nicht erwünscht ist, die gewünschten Oberflächenstrukturen von vornherein zu schaffen, kann dies auch nachträglich geschehen, und zwar beispielsweise durch nachträgliches Prägen oder Ätzen. Das Prägen kann beispielsweise durch geheizte oder heizbare Prägestempel erfolgen. Das Ätzen kann erfolgen mit den bekannten Mitteln der chemischen Ätzung oder durch physikalische Methoden wie der lonenätzung mit Sauerstoff oder anderen Bestrahlungen, die zu einer Aufrauhung der Oberfläche und einer damit erfindungsgemäß brauchbaren Oberflächenstruktur führen.

Weiterhin hat sich gezeigt, daß es auch möglich ist, die gewünschte Oberflächenstruktur zu erhalten durch Aufkleben eines Pulvers aus den hydrophoben Polymeren. Pulver von hydrophoben Polymeren mit der gewünschten Korngröße sind erhältlich. Optimale Ergebnisse werden aber nur erzielt, wenn man Pulver einsetzt mit relativ enger Komgrößenverteilung.

Neben den aus WO 96/04123 A1 bekannten Verfahren zur Herstellung von Masterstrukturen seien exemplarisch erwähnt Lithographie, Grautonlithographie. Mikrofräsen und -schneiden, Laserabtragen, Ätzen und Sandstrahlen.

Ebenso ist die folgende Replikation und Umformung von Masterstrukturen mittels Galvanik zur Herstellung eines Formwerkzeugs ein weitverbreitetes Verfahren, zum Beispiel das LIGA-Verfahren.

Diese Formwerkzeuge dienen als Ausgangspunkt für weitere Abformungen in Polymeren in großen Stückzahlen.

Für die Produktion von großen Stückzahlen gibt es somit im wesentlichen vier Verfahren.

### 1. Spritzguß

Hierbei wird in ein Formwerkzeug, welches mit einer Mikrostruktur ausgestattet ist, ein geschmolzenes Polymer unter hohem Druck in die Form eingespritzt, so daß sich das Negativ der Form und der Struktur im Polymer ausbildet. Nach dem Erstarren der Polymerschmelze in der Spritzgußform wird diese geöffnet, und das mikrostrukturierte Polymer der Form entnommen. Dieses Verfahren wird unter anderem für die Herstellung von Audio-CDs angewendet.
Der Nachteil des Spritzgusses liegt darin, daß sich auf diese Art und Weise nur kleine Flächen erzeugen lassen.

### 2. Strahlenvemetzende Polymere

a) Ein Träger mit einem strahlenvemetzbaren Polymer wird mittels eines transparenten, strukturierten Stempels oder einer Walze geformt, anschließend mittels Strahlung durch den Stempel oder durch die Walze vemetzt. Nach der Vernetzung wird das Werkzeug wieder entfernt.
b) Ein transparenter Träger mit einem strahlenvernetzbaren Polymer wird mittels eines strukturierten Stempels oder einer Walze geformt, anschließend mittels Strahlung durch den Träger vemetzt. Nach der Vernetzung wird das Werkzeug wieder entfernt.

Exemplarisch wird dieses Verfahren für Elektronen- und UV-Strahlung in dem Tagungsband 2001 der "RadTech Europe Conference and Exhibition" in dem Beitrag von Prof. Mehnert vom 10/2001 auf den Seiten 603 bis 608 beschrieben. Nachteile der strahlenvemetzenden Polymeren sind darin zu sehen, daß die Rohstoffauswahl eingeschränkt ist, die Rohstoffe darüber hinaus teuer sind und gefüllte, farbige Polymermischungen nur mit starken Einschränkungen möglich sind.

### 3. Stempelprägen

Ein thermoplastisches Polymer wird mittels eines strukturierten Metallstempels unter hoher Temperatur und hohem Druck geprägt, nach Abformung wird das Werkstück gekühlt (unterhalb des Glasübergangspunktes), um beim Herauslösen des Stempels die replizierte Struktur nicht zu zerstören.

Anschließend kann bei Verwendung eines bahnförmigen Polymer der Vorgang direkt angrenzend wiederholt werden.

Vorteilhaft am Stempelprägen ist, daß das Verfahren gut geeignet ist, um komplexe Strukturen wie Linsen und Prismen zu replizieren, und daß gleichzeitig eine sehr hohe Abformungsqualität erreichbar ist.

Auf der anderen Seite zeigt sich, daß das Stempelprägen ein sehr zeitaufwendiger Prozeß ist, daß hoher Verschleiß des Werkzeuges zu beobachten, daß eine sehr stark ausgeprägte Nahtstelle zwischen zwei Repliken entsteht und daß ein hoher maschineller Aufwand durch die notwendige Planlage der Werkzeuge betrieben werden muß.

### 4. Rotationsprägen

Ein bahnförmiges, thermoplastisches Polymer wird mittels einer strukturierten Metallwalze unter hoher Temperatur und sehr hohem Druck geprägt. Nach Abformung kann das Polymer gekühlt werden (unterhalb des Glasübergangspunktes), um beim Herauslösen des Stempels die replizierte Struktur nicht zu zerstören.

Auch hier stehen einigen Vorteilen mehrere Nachteile gegenüber. Es werden sehr hohe Prozeßgeschwindigkeiten erzielt. Weiterhin ergibt sich eine quasi nahtlose Strukturierung, die besonders gut geeignet ist für die Replikation von Beugungsgittern und/oder Hologrammen.

Allerdings ist das Verfahren des Rotationsprägung nur für mechanisch und thermisch sehr stabile Polymere (PET) geeignet. Wie beim Stempelprägen muß ein sehr hoher maschineller Aufwand durch die Anforderung von absoluter Planlage unter hohem Druck betrieben werden, was insbesondere die Skalierung auf große Arbeitsbreiten erschwert. Schließlich ist das Rotationsprägen kaum geeignet für die Abformung komplexer Strukturen, zum Beispiel Linsen oder Prismen, oder sehr hoher Strukturen.

Aus der WO 97/13633 A1 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der EP 0 799 686 A1 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der WO 01/19600 A1 ist ein Verfahren zur Erzeugung von mikrostrukturierten Polymerfolien gemäß den Oberbegriffen der Ansprüch 1 and 2 bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der DE 199 41 048 A1 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird.

Aus der EP 0 369 781 A2 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der JP 02 122 916 A ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der US 5,759,455 A ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der EP 1 146 170 A1 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist nicht mit einem Formwerkzeug umschlungen, sondern die Oberfläche der Walze selbst weist das Relief auf. Die walzennahe Oberfläche der Polymerfolie ist nach dem Spaltdurchgang entsprechend dem Relief ausgeformt.

Aus der US 5,281,371 A ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der EP 0 575 177 A1 ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aus der US 4,477,502 A ist ein Verfahren zur Erzeugung von mikrostrukturierten Polymerfolien bekannt, wobei ein Polymer in einen Spalt geführt wird, der von einer Walze und einer Gegenwalze gebildet wird, die einen Gegendruck aufbaut, das Polymer durch diesen durchgepresst wird. Die Walze ist mit einem Formwerkzeug umschlungen, das mit einem Relief versehen ist, das das Negativ der herzustellenden Oberflächenstruktur auf der Polymerfolie darstellt. Die walzennahe Oberfläche der Polymerfolie ist nach dem Spaltdurchgang entsprechend dem Relief ausgeformt.

Aufgabe der Erfindung ist es, hier Abhilfe zu schaffen, insbesondere ein Verfahren zu schaffen, das es ermöglicht, nano- und mikrostrukturierte Oberflächen auf Polymerfolien zu schaffen, wobei das Verfahren technisch unkompliziert sein soll. Das Verfahren soll des weiteren die schnelle Fertigung erlauben, die Vorteile der beiden Prägeverfahren (Stempelprägen und Rotationsprägen) kombinieren, die Abformung hoher, komplexer Strukturen quasi nahtlos ermöglichen, einen akzeptablen Aufwand beim Skalieren der Arbeitsbreiten aufweisen und letztendlich die Verwendung auch empfindlicher Polymerer erlauben.

Gelöst wird diese Aufgabe durch Verfahren, wie sie in den Hauptansprüchen näher gekennzeichnet sind. In den Unteransprüchen sind vorteilhafte Ausführungsformen der Verfahren beschrieben.

Demgemäß betrifft die Erfindung Verfahren zur Erzeugung von nano- und mikrostrukturierten Polymerfolien, wobei ein Polymer in einen Spalt geführt wird, der von einer Walze und einer Vorrichtung, nämlich einem Rakel, gebildet wird, die einen Gegendruck aufbaut. Das Polymer wird durch den Spalt gepreßt, so daß das Polymer nach dem Spalt folienförmig auf der Walze aufliegt.
Die Walze ist mit einem Formwerkzeug umschlungen, das mit einem Relief versehen ist, das das Negativ der herzustellenden Oberflächenstruktur auf der Polymerfolie darstellt, wobei die Strukturtiefe der Oberfläche des Formwerkzeugs zwischen 10 nm und 10.000 µm liegt, so daß die walzennahe Oberfläche der Polymerfolie entsprechend dem Relief ausgeformt ist.

Die Polymerfolie wird auf einem Trägermaterial erzeugt, das auf der der Walze abgewandten Seite des elastomeren Polymers in den Spalt aus Walze und Vorrichtung und an der Walzenoberfläche geführt wird.
Das Polymer bildet dabei zwischen Trägermaterial und Formwerkzeug im ausformenden Walzenspalt einen rotierenden Wulst aus.

In einer weiteren Ausführungsform der Erfindung bildet das Polymer im ausformenden Walzenspalt einen rotierenden Wulst aus.

Die Polymerfolie wird dann auf einem Trägermaterial erzeugt, das auf der der Walze abgewaridten Seite des elastomeren Polymers nach dem Spalt aus Walze und Vorrichtung an die Walze geführt wird.
Dieses Vorgehen bietet sich insbesondere an, wenn das zu beschichtende Trägermaterial thermischen oder mechanischen Beanspruchungen im Walzenspalt nicht gewachsen ist.
Das Trägermaterial wird dabei beispielsweise mittels einer Andruckwalze der Walze zugeführt.

Sehr günstig im Sinne der Erfindung ist es, wenn die derartig strukturierte Walze temperiert oder gekühlt wird und/oder wenn die Vorrichtung oberhalb des Schmelzpunktes des verwendeten Polymeres temperiert wird.

Weiter vorzugsweise wird das Formwerkzeug durch Sandstrahlen, Ätzen, Laserabtrag, lithographische Verfahren, Offsetdruck, galvanische Verfahren, LIGA und/oder Erosion mit dem Relief versehen.

Bei den abzuformenden Strukturen kann es sich um Strukturen im unteren Nanometerbereich von 10 bis 500 nm, bevorzugt 180 bis 250 nm, wie Mottenaugen zur Entspiegelung von Oberflächen, im unteren Mikrometerbereich von 0,5 bis 20 µm, bevorzugt 0,8 bis 8 µm, wie Beugungsgitter für Hologramme, im oberen Mikrometer- und Millimeterbereich von 5 bis 500 µm, wie Linsen und Prismen zur Lichtlenkung und Lichtleitung, und auch um erhabene, tastbare Strukturen wie Schriftzügen in Höhen und Breiten von einigen Millimetern handeln.
Ein besonderer Vorteil dieses Verfahren ist, daß Strukturen unterschiedlichster Dimensionen auf einem Formwerkzeug unmittelbar nebeneinander liegen können und dennoch in guter Qualität abgeformt werden.

Der Offsetdruck ist ein aus der Lithographie entwickeltes indirektes Druckverfahren, bei dem der Druck nicht unmittelbar auf das Formwerkzeug, sondern vom (seitenrichtigen) Druckträger zunächst auf einen mit einem Gummituch versehenen Zylinder erfolgt (seitenverkehrt), der seinerseits das Druckbild seitenrichtig auf das Formwerkzeug überträgt. Da der Offsetdruck ein Flachdruck-Verfahren ist, liegen druckende und nicht druckende Teile in einer Ebene. Erstere werden oleophil präpariert, so daß sie Druckfarbe aufnehmen, Wasser hingegen abstoßen; bei den nichtdruckenden Teilen des Druckträgers ist es umgekehrt.

Unter Galvanotechnik im engeren Sinne versteht man die elektrochemische Oberflächenbehandlung von Werkstoffen, das heißt die elektrolytische Abscheidung von metallischen (seltener auch nichtmetallischen) dünnen Schichten zum Zwecke der Verschönerung, des Schutzes vor Korrosion, der Erzeugung von Verbundwerkstoffen mit verbesserten Eigenschaften und dergleichen.
Die Galvanotechnik umfaßt die beiden Hauptgebiete Galvanostegie und Galvanoplastik. Die Galvanoplastik dient der Herstellung oder Reproduktion von Artikeln durch elektrolytische Abscheidung. Dazu wird von der Urform zunächst ein Abdruck (Negativ, Hohlform) aus Gips, Wachs, Guttapercha, Siliconkautschuk, niedrigschmelzenden Metall-Legierung und belichtetem und strukturiertem Photoresist usw. hergestellt. Der Abguß wird oberflächlich elektrisch leitend gemacht (durch chemischen Niederschlagung oder Aufdampfung von Metallen) und dann als Minuspol in der Galvanisierflüssigkeit mit dem abzuscheidenden Metall (zum Beispiel Cu, Ni, Ag etc.; Pluspol) überzogen. Nach Beendigung der Elektrolyse läßt sich die gebildete Metallschicht von der Form abheben.

Das Erodieren beschreibt ein Verfahren in der Fertigungstechnik, bei dem eine gewünschte Werkstückform durch gesteuertes Herauslösen von Werkstoff-Partikeln aus der Werkstückoberfläche als Folge elektrischer Funkenüberschläge erzielt wird.

LIGA beschreibt eine Kombination von Lithographie mit Synchrotonstrahlung, Galvanoformung und Abformung, um Mikrostrukturen für elektronische Schaltkreise herzustellen. Der Vorteil des Verfahrens liegt darin, daß diese Mikrostrukturen mit Strukturhöhen von mehreren hundert Mikrometern bei kleinsten Lateralabmessungen im Nanometerbereich gefertigt werden können.

Das Formwerkzeug besteht weiter vorteilhafterweise aus einem Polymer wie vernetztes Silikon, PET [Polyethylenterephthalat] oder Polyester und/oder einem Metall, beispielsweise Nickel.
Zur einfachen Applikation des Formwerkzeuges hat dieses eine Dicke von mindestens 10 µm plus der Strukturhöhe.

Im folgenden sollen beispielhaft Methoden angegeben werden, mit welchen Strukturen auf dem Formwerkzeug erzeugt werden können.
- Das Formwerkzeug kann als Struktur Beugungsgitter mit Gitterkonstanten von 1600 nm bis 2100 nm bei einer Tiefe von etwa 1000 nm tragen. Die Beugungsgitter sind dabei so angeordnet, daß sie bei Bestrahlung mit Weißlicht einen Schriftzug mit unterschiedlichen Farben erzeugen. Die Strukturen werden durch eine Maskenbelichtung in einem Positvphotoresist und anschließendem Auslösen der unbelichteten Bereiche auf einem Si-Wafer erzeugt. In der Folge werden diese weiterhin mit etwa 100 nm Nickel bedampft, um sie leitfähig zu machen, und abschließend galvanisch auf eine Gesamtdicke von 50 µm mit Nickelabscheidung gebracht.
- Mittels Grautonlithographie können Prismen mit einer Kantenlänge von 10 µm und einer Höhe von 7,5 µm erzeugt werden. Das Verfahren ist im wesentlichem mit dem oben beschriebenen identisch, außer daß zur Belichtung eine Grautonmaske genutzt wird.
- Mittels eines Lasers wird eine Polyesterfolie mit einer holographischen Topographie versehen, welche sich auf der Folie immer wiederholt, so daß ein "Streudruck" resultiert.
- In einen Messingrohling werden mittels eines Diamanten sogenannte V-Nuten mit einer Tiefe von 20 µm geschnitten.

Das Formwerkzeug ist in einer besonders bevorzugten Variante des Verfahrens mittels eines doppelseitig klebend ausgerüsteten Klebebands auf der Walze lösbar befestigt.

Vorzugsweise handelt es sich um ein Klebeband, das als Träger eine polymere Folie aus Polypropylen aufweist. Alternativ zu Polypropylen ist auch die Verwendung von beispielsweise PVC als Trägermaterial möglich.
Zur Beschichtung der beiden Außenflächen des Trägers werden zwei unterschiedliche Klebmassen verwendet. Auf die Seite des Klebebandes, die an der Trägerschicht der Druckplatte angesetzt wird, wird eine extrem schwach klebende Naturkautschuk-Klebmasse beschichtet. Die Klebmasse weist eine Klebkraft von 0,2 bis 7 N/cm, bevorzugt 1 N/cm, auf.
Die andere Klebebeschichtung wird von einer stark klebenden Schicht gebildet, die vorzugsweise ebenfalls auf Naturkautschuk basiert. Alternativ kann aber auch eine Klebemasse, die auf herkömmlichen Acrylaten aufbaut, eingesetzt werden. Diese Beschichtung ist durch eine Klebkraft von 2 bis 6 N/cm, bevorzugt 4,5 N/cm, gekennzeichnet.
Die angegebenen Klebkräfte sind nach AFERA 4001 gemessen.

Weiter vorzugsweise kann ein beidseitig klebend ausgerüstetes Klebeband Verwendung finden, wobei der Träger des Klebebandes eine Folie aus Polyethylenterephthalat (PET) ist und auf der Folie beidseitig selbstklebende Beschichtungen aufgebracht sind.
Die Oberfläche der Folie aus Polyethylenterephthalat (PET) ist ein- oder beidseitig zumindest partiell unter Verwendung einer Reagenz, die im Speziellen einen Ätzprozeß bewirkt, aufgerauht, und/oder die Oberflächenenergie der Oberfläche der Folie ist erhöht, so daß die Masseverankerung auf der Folie optimiert wird.

Aus diesem Grunde kann zwischen der Folie aus Polyethylenterephthalat (PET) und zumindest einer Klebemasse ein geschäumter Träger vorhanden sein.
Vorteilhaft ist darüber hinaus, wenn der geschäumte Träger aus Polyurethan, PVC oder Polyolefin(en) besteht.
Weiter bevorzugt ist, wenn die Oberflächen des geschäumten Trägers physikalisch vorbehandelt sind, insbesondere corona-vorbehandelt.

Weiter vorzugsweise hat die Folie aus Polyethylenterephthalat (PET) eine Dicke von 5 µm bis 500 µm, bevorzugt 5 µm bis 60 µm, ganz besonders bevorzugt 23 µm.

Um sehr gute Ergebnisse für die Aufrauhung zuerzieten, ist es zu empfehlen, als Reagenz Trichloressigsäure (Cl3C-COOH) oder Trichloressigsäure in Kombination mit inerten kristallinen Verbindungen, bevorzugt Siliziumverbindungen, besonders bevorzugt [SiO₂]ₓ, einzusetzen.
Sinn der inerten kristallinen Verbindungen ist, in die Oberfläche der PET-Folie eingebaut zu werden, um auf diese Weise die Rauhigkeit und die Oberflächenenergie zu verstärken.

Um die gewünschten Eigenschaften des Klebebandes, insbesondere die nötige Kohäsion, gezielt einzustellen, ist der Zusatz von Klebharzen und Füllstoffen wie unter anderem Kohlenwasserstoffharzen, Weichmachern, Alterungsschutzmitteln oder Kreide zu den Klebmassen möglich.

Gerade in diesem Fall hat es sich als vorteilhaft erwiesen, wenn zur Beschichtung der beiden Außenflächen des Trägers zwei unterschiedliche Klebmassen verwendet werden.

Auf die eine Seite des Klebebandes wird dann eine schwach klebende Acrylat-Klebemasse beschichtet. Die Klebmasse weist insbesondere eine Klebkraft von 0,5 bis 5 N/cm, bevorzugt 2,5 N/cm, auf.

Die andere Klebebeschichtung wird dann von einer stärker klebenden Schicht gebildet, die vorzugsweise ebenfalls auf Acrylat basiert. Diese Beschichtung ist insbesondere durch eine Klebkraft von 1 bis 6 N/cm, bevorzugt 4,5 N/cm, gekennzeichnet. Die angegebenen Klebkräfte sind nach AFERA 4001 gemessen.

Die gewünschten Klebkräfte der jeweiligen Schicht sind durch Art und Menge der verwendeten Harze sowie der eingesetzten Füllstoffe variierbar.

Das Formwerkzeug wird somit vorzugsweise aus einer Walze oder einem Sleeve erzeugt. Weiter vorzugsweise besteht dieses aus einem Polymer wie vernetztes Silikon und/oder PET und/oder einem Metall. Sodann liegt die Strukturtiefe der Oberfläche des Formwerkzeugs zwischen 10 nm und 10.000 µm.

Bei dem erfindungsgemäßen Verfahren liegt das zu strukturierende Polymer vorteilhafterweise während der Ausformung gänzlich erweicht oder in Schmelze vor.

Sehr vorteilhaft läßt sich als Polymer ein Polyolefin verwenden wie Polypropylen oder Polyethylen.
Die thermoplastischen Polyolefine umfassen insbesondere mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält.
Bevorzugt werden Mischungen verschiedener geeigneter Polyolefine verwendet.

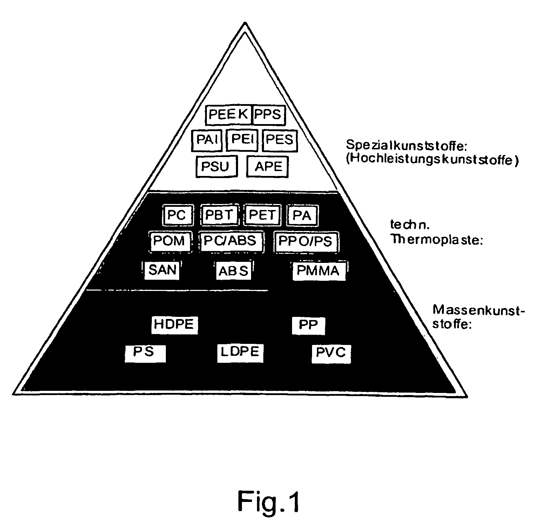

Allgemein eignen sich Thermoplasten hervorragend für die gestellten Forderungen. Zu ihnen gehören alle aus linearen oder thermolabilen vernetzten Polymer-Molekülen bestehenden Kunststoffe, zum Beispiel Polyolefine, Vinylpolymere, Polyamide, Polyester, Polyacetale, Polycarbonate, zum Teil auch Polyurethane und lonomere. Die Thermoplasten umfassen also Polymere, deren Eigenschaftsniveau sich von dem der Massenkunststoffe bis zu dem der Hochleistungskunststoffe (Spezialkunststoffe) erstreckt. Eine Übergangsgruppe zwischen diesen beiden Kunststoffklassen bilden die als technische Thermoplaste bezeichneten Polymere. Eine Übersicht über die wichtigsten Vertreter gibt das Schaubild gemäß Figur 1.

Das Polymer ist bevorzugt thermoplastisch, ein Polymerblend und/oder ein polymergebundenes Release, wie insbesondere N,N'-Ethylenbisstearamid.

Des weiteren kann das Polymer mit Farbstoffen wie TiO₂ oder Ruß und/oder mit Füllstoffen wie Kreide abgemischt sein.

Zur Stützung der Polymerfolie ist vorzugsweise ein in sich geschlossener Prozeßträger vorhanden, der über die Vorrichtung und die Walze geführt wird, und zwar derart, daß sich das Polymer beziehungsweise der Polymerfilm stets zwischen Prozeßträger und Walze befinden.

Das Polymer kann dem Walzenspalt durch ein vorgeschaltetes Walzenpaar, einen Extruder oder als Bahn so zu geführt werden, daß ein sich im Walzenspalt eine rotierende Polymerrolle (Wulst) bildet.
Dieser rotierende Wulst transportiert zum einen blasenförmige Lufteinschlüsse aus dem Walzenspalt an die Wulstoberfläche und zum anderen sorgt dieser für eine gleichmäßige Benetzung des Formwerkzeug, auch wenn Strukturen unterschiedlichster Gestalt und Höhe in unmittelbarer Nachbarschaft abgeformt werden sollen.

Das Trägermaterial mitsamt der Polymerfolie werden anschließend von der Walze abgenommen, beispielsweise über eine Abzugswalze.

Es können sich auf diese Weise Laminate ergeben, insbesondere wenn das Trägermaterial ebenfalls eine Polymerfolie ist.

Weiterhin kann die Trägerschicht gebildet werden von Folien (zum Beispiel aus PUR, PE oder PP, PET, PA), Vliesen, Geweben, Schäumen, metallisierte Folien, Verbundstoffe, Baumwolle, Laminaten, geschäumten Folien, Papier etc.

Als Trägerschicht dient ebenfalls vorzugsweise eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält.
Bevorzugt werden Mischungen verschiedener geeigneter Polyolefine verwendet.

Erfindungsgemäß hervorragend als Folien einsetzen lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Besonders bevorzugt sind monoaxial gereckte Folien auf Basis von Polypropylen.

Die Dicken der monoaxial gereckten Folien auf Basis von Polypropylen liegen bevorzugt zwischen 5 µm bis 500 µm, besonders bevorzugt 5 µm bis 60 µm.
Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Weiterhin besonders bevorzugt sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Beispielsweise ist ein metallocen-Polyethylen-Vliesstoff als Trägermaterial geeignet.

Der metallocen-Polyethylen-Vliesstoff weist vorzugsweise folgende. Eigenschaften auf:
- ein Flächengewicht von 40 bis 200 g/m², insbesondere von 60 bis 120 g/m², und/oder
- eine Dicke von 0,1 bis 0,6 mm, insbesondere von 0,2 bis 0,5, und/oder
- eine Höchstzugkraft-Dehnung längs von 400 bis 700 % und/oder
- eine Höchstzugkraft-Dehnung quer von 250 bis 550%.

Als Trägermaterial können dann alle bekannten textilen Träger wie Maschenwaren, Gewebe, Gewirke oder Vliese verwendet werden, wobei unter "Vlies" zumindest textile Flächengebilde gemäß EN 29092 (1988) sowie Nähwirkvliese und ähnliche, Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene eihzetne oder Büschel von Haltefasem, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.. Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar einem Artikel aus der Fachzeitschrift "kettenwirk-praxis 3/93", 1993, Seiten 59 bis 63
"Raschelgewirkte Abstandsgewirke"
und
einem Artikel aus der Fachzeitschrift "kettenwirk-praxis 1/94", 1994, Seiten 73 bis 76
"Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasem, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasem sind, insbesondere zwischen 5% und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vemähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gittemetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil; Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändem.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung. UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.
Eine besondere Ausführungsform des Trägers besteht weiterhin darin, Papiere oder Folien zu verwenden, welche antiadhäsiv ausgerüstet sind und mit einer Selbstklebemasse einseitig beschichtet werden und dem zu strukturierendem Polymer mit seiner selbstklebenden Seite zugeführt werden.

Beispielsweise kann ein Papierträgers mit einer Dichte von 1,1 bis 1,25 g/cm³ verwendet werden, wobei der Papierträger im wesentlichen eine obere und eine untere Seite aufweist.
Der Papierträger ist auf der oberen und/oder auf der unteren Seite mit einer Kunststoffbeschichtung versehen, wobei zumindest auf einer der gegebenenfalls vorhandenen zwei Kunststoffbeschichtungen eine antiadhäsive Schicht aufgetragen ist.

Vorzugsweise weist der Papierträger eine Dichte auf von 1,12 bis 1,2 g/cm³, insbesondere 1,14 bis 1,16 g/cm³.
Weiter vorzugsweise weist der Papierträger ein Flächengewicht von 40 bis 120 g/m², bevorzugt 50 bis 110 g/m², ganz besonders bevorzugt 60 bis 100 g/m², auf.

In einer weiteren vorteilhaften Ausbildung ist der Papierträger ein hochverdichtetes Glassine-Papier, der auf der oberen und auf der unteren Seite mit einer Kunststoffbeschichtung versehen ist, wobei auf beiden Kunststoffbeschichtungen eine antiadhäsive Schicht, insbesondere eine Silikonbeschichtung, aufgetragen ist.

Als Kunststoffbeschichtung werden insbesondere Polyolefine wie LDPE, HDPE, Mischungen der beiden zuvor genannten, zum Beispiel MDPE, PP oder PET verwendet. Ganz besonders vorteilhaft ist LDPE.

Die polybeschichteten Seiten des Papierträgers aus LDPE oder HDPE sind darüber hinaus matt oder glänzend herstellbar.

Weiter vorzugsweise wird die Kunststoffbeschichtung mit 5 bis 30 g/m², bevorzugt 10 bis 25 g/m², ganz besonders bevorzugt 15 bis 20 g/m², aufgetragen.
Insbesondere bei Polyester kann der Auftrag auch bereits bei 2 bis 3 g/m² erfolgen.

Darüber hinaus stellt eine hervorragende Ausbildung die Tatsache dar, wenn als antiadhäsive Schichten zum Beispiel Silikon, Paraffin, Teflon oder Wachse verwendet werden. Dann können silikonfreie Trennschichten, zum Beispiel "non Silicone" von der Fa. Rexam, oder silikonarme Trennschichten, zum Beispiel "Lo ex" von der Fa. Rexam, eingesetzt werden.

Je nach Anwendungsfall des erfindungsgemäßen Trennmateriats ist es möglich, die antiadhäsiven Schichten auf beiden Seiten des Trennmaterials gleich oder unterschiedlich trennend auszugestalten, also auch auf beiden Seiten voneinander verschiedene Trenneigenschaften einzustellen (controlled release) .

Vorzugsweise wird lösemittelfrei beschichtetes Silikon eingesetzt.
Weiter vorzugsweise wird das lösemittelfrei beschichtete Silikon mit 0,8 bis 3,7 g/m², bevorzugt 1,3 bis 3,2 g/m², ganz besonders bevorzugt 1,8 bis 2,8 g/m², aufgetragen.

Aber auch lösemittelhaltige Systeme sind möglich, und zwar mit einer Auftragsmenge von insbesondere 0,3 bis 1 g/m².

Des weiteren ist vom Erfindungsgedanken auch eine Polymerfolie umfaßt, die nach dem erfindungsgemäßen Verfahren hergestellt wird sowie die Verwendung dieser als Träger in einem Selbstklebeband, das unter Zuhilfenahme einer insbesondere druckempfindlichen Haftschmelzklebemasse hergestellt wird, indem auf die Polymerfolie einseitig die Selbstklebemasse aufgetragen wird, und zwar auf der nichtstrukturierten Oberfläche.
Das Selbstklebeband kann anschließend zu einer Rolle aufgewickelt werden.

Als Klebemassen können im wesentlichen alle bekannten Klebemassen mit ausreichend hoher Klebkraft auf dem zu verpackenden Haftgrund eingesetzt werden.
Die Klebemasse des Klebebandes kann aus einer Klebemasse auf Basis von lösemittelhaltigen Naturkautschuk- und Acrylatklebemassen bestehen. Bevorzugt sind Klebemassen auf Basis von Acrylatdispersionen, besonders bevorzugt sind Klebemassen auf Basis von Styrol-Isopren-Styrol-Blockcopolymeren. Diese Klebemassentechnologien sind bekannt und werden in der Klebebandindustrie eingesetzt.

Die Auftragsmenge der Klebemasse auf das Trägermaterial beträgt bevorzugt 15 bis 60 g/qm. In einer weiteren bevorzugten Ausführung wird der Schichtauftrag von 20 bis 30 g/qm eingestellt.

Die Herstellung der Klebebänder kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York pp. 767-808. Die bekannten Verfahren zum Trocknen und Schneiden der Klebebänder sind ebenfalls im Handbook of Pressure Sensitive Adhesive Technology, Seite 809-874 zu finden.

Als Klebemasse ist eine solche auf Acrylathotmelt-Basis geeignet, die einen K-Wert von mindestens 20 aufweist, insbesondere größer 30 (gemessen jeweils in 1 Gew.%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vemetzt werden. Andere Vemetzungsarten sind aber auch möglich, zum Beispiel die Elektronenstrahlenvemetzung.

In einer besonders bevorzugten Ausführungsform werden als Selbstklebemassen Copolymerisate aus (Meth)acrylsäure und deren Estem mit 1 bis 25 C-Atomen, Malein-, Fumar- und/oder Itaconsäure und/oder deren Estem, substituierten (Meth)acrylamiden, Maleinsäureanhydrid und anderen Vinylverbindungen, wie Vinylestem, insbesondere Vinylacetat, Vinylalkoholen und/oder Vinylethem eingesetzt.

Der Restlösungsmittel-Gehalt sollte unter 1 Gew.-% betragen.

Beispielhaft sei folgende Selbstklebemasse beschrieben, bei der die folgenden Monomergemische (Mengenangaben in Gew.-%) in Lösung copolymerisiert werden. Die Polymerisationsansätze bestehen aus 60 bis 80 Gew.% der Monomergemische sowie 20 bis 40 Gew.% Lösungsmittel wie Benzin 60/95 und Aceton.

Die Lösungen werden in üblichen Reaktionsgefäßen aus Glas oder Stahl (mit Rückflußkühler, Ankerrührer Temperaturmeßeinheit und Gaseinleitungsrohr) zunächst durch Spülen mit Stickstoff vom Sauerstoff befreit und dann zum Sieden erwärmt.

Durch Zusatz von 0,1 bis 0,4 Gew.-% eines für die radikalische Polymerisation üblichen Peroxid- oder Azo-Initiators, wie zum Beispiel Dibenzoylperoxid oder Azobisisobutyronitril, wird die Polymerisation ausgelöst. Während der Polymerisationszeit von etwa 20 Stunden wird je nach Viskositätsanstieg gegebenenfalls mehrmals mit weiterem Lösungsmittel verdünnt, so daß die fertigen Polymerlösungen einen Feststoffgehalt zwischen 25 bis 65 Gew.-% aufweisen.

Die so hergestellten Massen werden je nach Bedarf und Eignung weiter abgemischt und nach Entfernung des Lösungsmittels, wie es in der EP 0 621 326 A1 beschrieben ist, beschichtet.
Je nach Rezeptur und Beschaffenheit der Zusatzstoffe werden die Abmischungen entweder vor oder nach der Aufkonzentration in entsprechend dafür geeigneten
Apparaturen vorgenommen.
Es wird eine Masse der Monomerzusammensetzung der folgenden Zusammensetzung hergestellt:

| | Gew.% |
|---|---|
| 2-Ethylhexylacrylat | 21 |
| n-Butylacrylat | 21 |
| tert. Butylacrylat | 50 |
| Acrylsäure | 8 |

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-. ADS-. TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol bzw. durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0.9 bis 1,2 g/cm³.

Sie sind löslich in organischen Lösungsmitteln wie Ethem, Estem, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethem und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10' % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H3002, Abietin-, Neoabietin-, Lävopimar-, Pimar-, Isopimar-, und Palustrinsäure, neben hydrierter und dehydrierter Abietinsäure.
Die Mengenverhältnisse dieser Säuren variieren in Abhängigkeit von der Provenienz des Kolophoniums.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige .Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder andere hochenergetische elektromagnetische Wechselfelder erfolgen.

Des weiteren ist vom Erfindungsgedanken umfaßt eine Polymerfolie, wie sie in einem der oben ausführlich geschilderten Verfahren erhalten werden kann.

Weiterhin läßt sich die erfindungsgemäße Polymerfolie hervorragend als Träger für eine insbesondere selbstklebende Beschichtung verwenden. Letztere kann gewählt werden aus der Gruppe, die weiter oben offenbart ist.

## Patentansprüche

1. Verfahren zur Erzeugung von nano- und mikrostrukturierten Polymerfolien, wobei
ein Polymer in einen Spalt geführt wird, der von einer Walze und einer Vorrichtung gebildet wird, die einen Gegendruck aufbaut,
das Polymer durch diesen durchgepresst wird,
das Polymer nach dem Spalt folienförmig auf der Walze aufliegt, die mit einem Formwerkzeug umschlungen ist, das mit einem Relief versehen ist, das das Negativ der herzustellenden Oberflächenstruktur auf der Polymerfolie darstellt und wobei die Strukturtiefe der Oberfläche des Formwerkzeugs zwischen 10 nm und 10.000 *µ*m liegt, so dass die walzennahe Oberfläche der Polymerfolie entsprechend dem Relief ausgeformt ist,
die Polymerfolie auf einem Trägermaterial erzeugt wird, das auf der der Walze abgewandten Seite des Polymers in den Spalt aus Walze und Vorrichtung und an der Walzenoberfläche geführt wird,
das Polymer zwischen Trägermaterial und Formwerkzeug im ausformenden Spalt einen rotierenden Wulst ausbildet, darduch **gekennzeichnet**, dass die Vorrichtung ein Rakel ist.

2. Verfahren zur Erzeugung von nano- und mikrostrukturierten Polymerfolien, wobei
ein Polymer in einen Spalt geführt wird, der von einer Walze und einer Vorrichtung gebildet wird, die einen Gegendruck aufbaut,
das Polymer durch diesen durchgepresst wird,
das Polymer nach dem Spalt folienförmig auf der Walze aufliegt, die mit einem Formwerkzeug umschlungen ist, das mit einem Relief versehen ist, das das Negativ der herzustellenden Oberflächenstruktur auf der Polymerfolie darstellt und wobei die Strukturtiefe der Oberfläche des Formwerkzeugs zwischen 10 nm und 10.000 µm liegt, so dass die walzennahe Oberfläche der Polymerfolie entsprechend dem Relief ausgeformt ist,
das Polymer im ausformenden Spalt einen rotierenden Wulst ausbildet,
die Polymerfolie auf einem Trägermaterial erzeugt wird, das auf der der Walze abgewandten Seite des Polymers geführt wird , **dadurch** gekenzeichnet, dass das Trägermaterial nach dem Spalt aus Walze und Vorrichtung an die Walze geführt wird, und die Vorrichtung ein Rakel ist.

3. Verfahren nach den Ansprüchen 1 oder 2, **dadurch gekennzeichnet, dass**
die Walze temperiert oder gekühlt wird.

4. Verfahren nach zumindest einem der Ansprüche 1 bis 3, **dadurch gekennzeichnet, dass**
die Vorrichtung auf eine Temperatur oberhalb des Schmelzpunktes des verwendeten Polymeres temperiert wird.

5. Verfahren nach zumindest einem der vorherigen Ansprüche, **dadurch gekennzeichnet, dass**
das Formwerkzeug durch Sandstrahlen, Ätzen, Laserabtrag, lithographische Verfahren, Offsetdruck, galvanische Verfahren, LIGA, Schneiden, Fräsen und/oder Erosion mit dem Relief versehen wird.

6. Verfahren nach zumindest einem der vorherigen Ansprüche, **dadurch gekennzeichnet, dass**
das Formwerkzeug aus einem Polymer wie vernetztes Silikon oder PET besteht.

7. Verfahren nach zumindest einem der vorherigen Ansprüche, **dadurch gekennzeichnet, dass**
das Formwerkzeug aus einem Metall besteht.

8. Verfahren nach zumindest einem der vorherigen Ansprüche, **dadurch gekennzeichnet, dass**
das Formwerkzeug aus einer Walze oder einem Sleeve erzeugt wird.

9. Verfahren nach zumindest einem der vorherigen Ansprüche, **dadurch gekennzeichnet, dass**
das Formwerkzeug mittels eines doppelseitig klebend ausgerüsteten Klebebands auf der Walze lösbar befestigt ist.

10. Verfahren nach zumindest einem der vorherigen Ansprüche, **dadurch gekennzeichnet, dass**
zur Stützung der Polymerfolie ein in sich geschlossener Prozessträger vorhanden ist, der über die Vorrichtung und die Walze geführt wird, und zwar derart, dass sich das Polymer beziehungsweise der Polymerfilm stets zwischen Prozessträger und Walze befinden.

11. Verfahren nach zumindest einem der vorherigen Ansprüche, **dadurch gekennzeichnet, dass**
das Polymer thermoplastisch ist, das Polymer in erweichter oder geschmolzener Form vorliegt, ein Polymerblend und/oder ein polymergebundenes Release ist, wie insbesondere **NN'Ethylenbisstearamid.**

12. Verfahren nach zumindest einem der vorherigen Ansprüche, **dadurch gekennzeichnet, dass**
das Polymer mit Farbstoffen wie TiO₂ oder Ruß und/oder mit Füllstoffen wie Kreide abgemischt ist.

13. Verfahren nach zumindest einem der vorherigen Ansprüche, **dadurch gekennzeichnet, dass**
das Polymer nach der Strukturierung einer Vernetzung zum Beispiel durch ionisierende Strahlung unterworfen wird.

## Claims

1. Process for producing nanostructured and microstructured polymer films in which a polymer is guided into a gap formed by a roll and a means which develops an opposing pressure, the polymer is pressed through the gap, after the gap, the polymer lies in the form of a film on the roll, there being, wrapped around the roll, a form tool which is provided with a relief which represents the negative of the surface structure to be produced on the polymer film, the structure depth of the surface of the form tool being between 10 nm and 10 000 µm, so that the near-roll surface of the polymer film is shaped in accordance with the relief, the polymer film is produced on a support material which is guided, on the side of the polymer facing away from the roll, into the gap formed by roll and means and at the roll surface, the polymer forms a rotating bead in the forming gap between support material and form tool, **characterized in that** the means is a doctor blade.

2. Process for producing nanostructured and microstructured polymer films in which a polymer is guided into a gap formed by a roll and a means which develops an opposing pressure, the polymer is pressed through the gap, after the gap, the polymer lies in the form of a film on the roll, there being, wrapped around the roll, a form tool which is provided with a relief which represents the negative of the surface structure to be produced on the polymer film, the structure depth of the surface of the form tool being between 10 nm and 10 000 µm, so that the near-roll surface of the polymer film is shaped in accordance with the relief, the polymer forms a rotating bead in the forming gap, the polymer film is produced on a support material which is guided on the side of the polymer facing away from the roll, **characterized in that** the support material is guided, after the gap formed by roll and means, onto the roll, and the means is a doctor blade.

3. Process according to Claim 1 or 2, **characterized in that**
the roll is heated or cooled.

4. Process according to at least one of Claims 1 to 3, **characterized in that**
the means is heated to a temperature above the melting point of the polymer used.

5. Process according to at least one of the preceding claims, **characterized in that** the form tool is provided with the relief by sandblasting, etching, laser ablation, lithographic techniques, offset printing, electroplating techniques, LIGA, cutting, milling and/or erosion.

6. Process according to at least one of the preceding claims, **characterized in that** the form tool is composed of a polymer such as crosslinked silicone or PET.

7. Process according to at least one of the preceding claims, **characterized in that** the form tool is composed of a metal.

8. Process according to at least one of the preceding claims, **characterized in that**
the form tool is produced from a roll or a sleeve.

9. Process according to at least one of the preceding claims, **characterized in that** the form tool is fastened detachably on the roll by means of a double-sided adhesive tape.

10. Process according to at least one of the preceding claims, **characterized in that**, in order to support the polymer film, a self-contained process support is present which is guided via the means and the roll in such a way that the polymer or polymer film is continually situated between process support and roll.

11. Process according to at least one of the preceding claims, **characterized in that** the polymer is thermoplastic, is in softened or melted form, is a polymer blend and/or a polymer-bound release, such as, in particular, NN' ethylenbisstearamide.

12. Process according to at least one of the preceding claims, **characterized in that** the polymer is blended with colorants such as TiO₂ or carbon black and/or with fillers such as chalk.

13. Process according to at least one of the preceding claims, **characterized in that**, after structuring, the polymer is subjected to crosslinking, for example, by means of ionizing radiation.

## Revendications

1. Procédé de production de feuilles polymères nano- et microstructurées, dans lequel un polymère est guidé dans une fente formée par un rouleau et un dispositif, qui crée une contre-pression, le polymère étant comprimé par eux, le polymère se trouvant, après la fente, sous forme de feuille sur le rouleau, lequel est entouré d'un outil de formage muni d'un relief qui représente le négatif de la structure de surface à réaliser sur la feuille polymère, et la profondeur de structure de la surface de l'outil de formage étant de comprise entre 10 nm et 10 000 µm, de manière que la surface de la feuille de polymère du côté du rouleau soit façonnée de manière correspondante au relief, où la feuille polymère est produite sur un matériau de support, la face de la feuille polymère opposée au rouleau étant amenée dans la fente formée par le rouleau et le dispositif et sur la surface du rouleau, le polymère formant entre le matériau de support et l'outil de formage dans l'interstice du rouleau de moulage un bourrelet en rotation, **caractérisé en ce que** le dispositif est une racle.

2. Procédé de production de feuilles polymères nano- et microstructurées, dans lequel un polymère est guidé dans une fente formée par un rouleau et un dispositif, qui crée une contre-pression, le polymère étant comprimé par eux, le polymère se trouvant, après la fente, sous forme de feuille sur le rouleau, lequel est entouré d'un outil de formage muni d'un relief qui représente le négatif de la structure de surface à réaliser sur la feuille polymère, et la profondeur de structure de la surface de l'outil de formage étant de comprise entre 10 nm et 10 000 µm, de manière que la surface de la feuille de polymère du côté du rouleau soit façonnée de manière correspondante au relief, le polymère formant un bourrelet en rotation en sortant de la fente de moulage, la feuille polymère étant produite sur un matériau de support lequel est guidé sur le côté du polymère opposé au rouleau, **caractérisé en ce que** le matériau de support est amené au rouleau, après la fente formée par le rouleau et le dispositif, et que le dispositif est une racle.

3. Procédé selon la revendication 1 ou 2, **caractérisé en ce que** le rouleau est tempéré ou refroidi.

4. Procédé selon au moins l'une quelconque des revendications 1 à 3, **caractérisé en ce que** le dispositif est tempéré à une température supérieure au point de fusion du polymère utilisé.

5. Procédé selon au moins l'une quelconque des revendications qui précèdent, **caractérisé en ce que** l'outil de formage est muni d'un relief par sablage, gravure, marquage laser, procédé lithographique, impression offset, procédé galvanique, LIGA, coupe, fraisage et / ou érosion.

6. Procédé selon au moins l'une quelconque des revendications qui précèdent, **caractérisé en ce que** l'outil de formage est constitué d'un polymère tel que du silicone ou du PET réticulé.

7. Procédé selon au moins l'une quelconque des revendications qui précèdent, **caractérisé en ce que** l'outil de formage est constitué d'un métal.

8. Procédé selon au moins l'une quelconque des revendications qui précèdent, **caractérisé en ce que** l'outil de formage est produit sur un rouleau ou un manchon.

9. Procédé selon au moins l'une quelconque des revendications qui précèdent, **caractérisé en ce que** l'outil de formage est fixé de manière amovible sur le rouleau au moyen d'un ruban adhésif double face.

10. Procédé selon au moins l'une quelconque des revendications qui précèdent, **caractérisé en ce que**, pour le soutien de la feuille polymère, est prévu un support de travail en soi fermé, qui est guidé sur le dispositif et le rouleau, et ce de manière que le polymère ou le film polymère se trouve toujours entre le support de travail et le rouleau.

11. Procédé selon au moins l'une quelconque des revendications qui précèdent, **caractérisé en ce que** le polymère est thermoplastique, le polymère se trouve sous forme ramollie ou fondue, est un mélange de polymères et / ou un antiadhésif à liant polymère, comme en particulier du N,N'-éthylène-bis-stéaramide.

12. Procédé selon au moins l'une quelconque des revendications qui précèdent, **caractérisé en ce que** le polymère est additionné de colorants tels que du TiO₂ ou du noir de fumée et / ou de charges telles que de la craie.

13. Procédé selon au moins l'une quelconque des revendications qui précèdent, **caractérisé en ce que** le polymère est, après la structuration, soumis à une réticulation, par exemple au moyen d'un rayonnement ionisant.
